# EUROPÄISCHE PATENTSCHRIFT

(11) **EP 2 667 074 B1**
(45) Veröffentlichungstag und Bekanntmachung des Hinweises auf die Patenterteilung: **04.11.2015**
(21) Anmeldenummer: 12169551.4
(22) Anmeldetag: 25.05.2012
(51) Int. Cl.: F16L 33/22, F16L 37/091, F16L 37/092

(54) **System mit Klemmteil zur Steckverbindung von Rohren**
System with clamp parts for connecting tubes
Système de connexion de tuyaux avec clip de serrage

(43) Veröffentlichungstag der Anmeldung: 27.11.2013
(73) Patentinhaber: Systemvertrieb Jäger GmbH Sanitär- und Heizungstechnik, 6845 Hohenems (AT)
(72) Erfinder: Jäger, Daniel, 6845 Hohenems (AT); Mainhart, Patrick, 97499 Donnersdorf (DE)
(74) Vertreter: Müller, Enno

(56) Entgegenhaltungen:
- EP-A1- 1 669 656
- EP-A1- 2 180 223
- WO-A1-03/021143
- WO-A1-2009/060462
- DE-A1- 19 524 934
- DE-B4-102006 015 158
- DE-U1- 9 400 545
- GB-A- 2 072 780
- US-A1- 2009 160 178

## Beschreibung

Die Erfindung betrifft ein System zur Steckverbindung von Rohren nach den Merkmalen des Anspruches 1.

Derartige Systeme zur Steckverbindung von Rohren sind insbesondere in der Haustechnik bekannt. Versorgungsrohre wie insbesondere Rohre eines Heizungssystems können so einfach und sicher miteinander verbunden werden.

Zum Stand der Technik ist beispielsweise auf die EP 1669 656 A1 und die DE 10 2006 015158 B4 zu verweisen.

Im Stand der Technik sind einerseits Systeme bekannt, siehe DE 195 24 934 A1, US2009/160878 A1, DE 94 00 545 U1, GB 207 727 80 A1 und EP 2 180 223 A1, bei welchen die Innenhülse vollständig ohne eine Dichtung ausgebildet ist. Weiter sind aus der bereits genannten EP 1669 656 A1, der bereits genannten DE 10 2006 015158 B4 und aus der WO2009/060462 A1 Systeme zur Steckverbindung bekannt, bei welchen zwar die Innenhülse nicht aber die Außenhülse eine Dichtung aufweist.

Ausgehend von einem Stand der Technik gemäß der DE 195 24 934 A1 beschäftigt sich die Erfindung mit der Aufgabenstellung, ein System zur Steckverbindung von Rohren im Hinblick auf eine Haltbarkeit günstiger zu gestalten.

Die Aufgabe ist beim Gegenstand des Anspruches 1 gelöst, wobei darauf abgestellt ist, dass die Innenhülse eine oder mehrere der Axialrichtung der Innenhülse hintereinander angeordnete Dichtungen aufweist zur dichtenden Zusammenwirkung zwischen der Innenhülse und einer Innenfläche des einzusteckenden Rohres und dass der Raum zwischen der Außenhülse und dem einzusteckenden Rohr insgesamt abgedichtet ist. Erfindungsgemäß ist eine hohe Haltbarkeit des Systems durch eine günstige Abdichtung, konkret durch eine Kombination von an der Außenhülse innenseitig und der Innenhülse, außenseitig, vorgesehene Dichtungen erreicht. Dadurch, dass die Dichtungen einerseits mit dem einzusteckenden Rohr, andererseits aber mit der Innenhülse zusammenwirkend angeordnet und ausgebildet sind, ist ergänzend zu der ohnehin auch hier vorgesehenen dichtenden Zusammenwirkung zwischen der Innenhülse und einer Innenfläche des einzusteckenden Rohres auch im Hinblick von außen etwa eintretender Feuchtigkeit etc. ein günstiger Abschluss des Systems erreicht. Sowohl das Klemmteil wie auch ein Stirnende des einzusteckenden Rohres sind günstig geschützt. Das Klemmteil ist vorteilhaft in einem insgesamt abgedichteten Raum aufgenommen.

Dies ist insbesondere auch wesentlich im Hinblick auf eine mögliche Korrosionswirkung in Bezug auf ein eingeschobenes Rohr. Ein solches eingeschobenes Rohr kann allgemein und insbesondere im Rahmen der Erfindung ein sogenanntes Verbundrohr sein, das mit einer oder mehreren metallischen Lagen ausgebildet ist, die von einer oder mehreren Kunststofflagen umgeben sind. Da die Innenhülse, die auch als Fitting bezeichnet werden kann, oftmals auch ein Metallteil ist und gegebenenfalls auch aus unterschiedlichem Metall zu einer Metalllage des Verbundrohres besteht, kann sich auch insoweit ein Korrosionsangriff, etwa im Sinne einer Kontaktkorrosion, ergeben. Durch die bevorzugt vorgesehene Abdichtung kann dem wirksam entgegengewirkt werden.

Hinsichtlich des Klemmteils kann vorgesehen sein, dass das Klemmteil rohrabschnittsförmig gebildet ist mit quer zu seiner Rohrachse wirkenden, im Querschnitt zahnartig gebildeten Halterungsausformungen. Dadurch, dass das Klemmteil insgesamt bereits mit den Halterungsausformungen der genannten Art gebildet ist, kann mit einem Teil eine wirksame Einklemmung und auch axiale Halterung des einzusteckenden Rohres erreicht sein.

Es ist bevorzugt hinsichtlich der an der Außenhülse - innenseitig - ausgebildeten ersten und/oder zweiten Dichtung, dass diese Dichtung im Querschnitt zahnartig gebildet ist. Die zahnartige Ausbildung der Dichtung lässt eine hohe Komprimierung im zusammengesteckten Zustand erreichen und zudem auch einen durch die Dichtung, in Abhängigkeit des dafür gewählten Materials, mit gegebenen Effekt erreichen, der eine Auszugssicherung des eingesteckten Rohres erhöht.

Eine im Querschnitt zahnartig ausgebildete Dichtung kann bevorzugt eine steilere und eine flachere Flanke aufweisen. Hierbei ist "steil" und "flach" im Hinblick auf einen Winkel zu sehen, welchen die jeweilige Flanke der Dichtung mit einer durch die Spitze der zahnartigen Ausbildung gehenden Geraden einschließt, die in Bezug auf eine Mittelachse der Außenhülse senkrecht steht.

Im weiterer Bevorzugung ist vorgesehen, dass die flachere Flanke der Dichtung der Außenhülse die in Einsteckrichtung erste Flanke ist. Das einzusteckende Rohr läuft also auf eine vergleichsweise sich flach erstreckende, also einen großen Winkel mit der genannten Geraden einschließende Flanke der Dichtung auf. Dies begünstig ein Überlaufen der Dichtung beim Einstecken durch das einzusteckende Rohr.

Dagegen ist weiter bevorzugt die steilere Flanke der Dichtung der Außenhülse rückseitig zu der flacheren Flanke ausgebildet. So kann ein widerhakenartiger Effekt hinsichtlich der Dichtung erreicht werden.

Im Hinblick auf das System ist auch bevorzugt, dass die Innenhülse eine oder mehrere in Axialrichtung der Innenhülse hintereinander angeordnete Dichtungen aufweist.

Die Dichtungen der Außenhülse und/oder die Dichtungen der Innenhülse sind bevorzugt umlaufend, weiter bevorzugt umlaufend mit demselben Querschnitt, ausgebildet.

Eine Dichtung der Innenhülse ist gleichfalls bevorzugt im Querschnitt zahnartig gebildet, auch bevorzugt mit unterschiedlich steilen Flanken, wobei sich die Steilheit auch im Hinblick auf die genannte Gerade, nunmehr bezogen auf eine Achse der Innenhülse, zu der die Gerade rechtwinklig verläuft, ergibt. Eine flachere Flanke der Dichtung der Innenhülse ist auch bevorzugt einsteckseitig des einzusteckenden Rohres ausgebildet und die steilere Flanke entsprechend rückseitig zu der flacheren Flanke.

Hinsichtlich des Klemmteils ist weiter bevorzugt, dass eine Zahnausformung einsteckseitig eine Einführschräge aufweist. Die Zahnausformung ist entsprechend auch hier mit unterschiedlichen Flankenwinkeln gebildet, wobei im Hinblick auf die Einführschräge die flachere Flanke ebenfalls einsteckseitig des einzusteckenden Rohres ausgebildet ist. Auch bezüglich des Klemmteils ist die Steilheit einer Flanke eines Halterungsvorsprungs im Bezug auf eine Gerade zu sehen, die durch eine Spitze des Halterungsvorsprungs verläuft und senkrecht zu einer Mittelachse des Klemmteils steht. Hierbei schließt ersichtlich die flachere Flanke einen größeren Winkel mit dieser Geraden ein als die steilere Flanke.

Für alle genannten steileren oder flacheren Flanken ist bevorzugt, dass eine flachere Flanke einen Winkel im Bereich von 30° bis 70° mit der jeweils genannten Geraden einschließt und eine steilere Flanke einen Winkel von 0° bis 45°.

Das Klemmteil kann zunächst ein Metallteil sein. Insbesondere auch ein durch Drehen hergestelltes Metallteil. Weiter kann das Klemmteil auch aus einem Kunststoff bestehen und bevorzugt ein Kunststoffspritzteil sein.

Im Hinblick auf das Klemmteil ist weiter bevorzugt, dass eine Zahnspitze einer Zahnausformung gegenüber einem sich in Einstreckrichtung anschließenden Wandbereich des Klemmteils vorragend ausgebildet ist. Entsprechend lässt sich ein solches Klemmteil beispielsweise nicht in einfacher Weise, ohne dass Weiteres erforderlich wäre, aus einem Rohrteil herstellen. Vielmehr muss entweder eine entsprechende Umformung wie etwa Umbiegung erfolgen oder etwa eine beispielsweise durch Drehen, insbesondere bezogen auf ein Metallteil, erfolgte Ausnehmung des Wandbereiches, der sich an die Zahnausformung in der beschriebenen Weise anschließt.

Der genannte anschließende Wandbereich kann eine axiale Länge des Klemmteils betreffen, die einem Drittel bis zum Zweifachen eines freien Durchmessers des Klemmteils in diesem Wandbereich entspricht.

Es ist bevorzugt, dass eine im Querschnitt als Zahnspitze erscheinende Eingriffskante des Klemmteils über ihre Länge, also in Umfangsrichtung gesehen, unterschiedlichen Abstand zu einer zentralen Längsachse des Klemmteils aufweist. So können im Hinblick auf die Einwirkungen auf ein zu klemmendes Rohr innerhalb einer in Umfangsrichtung umlaufenden Eingriffskante Spitzenbereiche geschaffen werden. Insbesondere lässt sich hierdurch ein jedenfalls anfänglich bereits sicheres Festhalten eines eingesteckten Rohres erreichen. Sollte eine Axialkraft in Ausziehrichtung auf das Rohr wirken, gräbt sich eine Eingriffskante, ausgehend von den Spitzen, unter Verstärkungswirkung der Halterung in die Rohrwandung ein.

Das Klemmteil ist weiter bevorzugt mit einzelnen, sich in Achsrichtung erstreckenden Klemmfingern ausgebildet. Entsprechend ist eine Halterungsausformung bevorzugt nicht integral, also unterbrechungsfrei umlaufend vorgesehen, sondern mit jedenfalls zur Darstellung der einzelnen Klemmfinger gegebenen Unterbrechungen.

Insbesondere im Bezug auf die Klemmfinger ist auch bevorzugt, dass eine Eingriffskante zugeordnet einem Umfangsende des Klemmfingers, also einer einem weiteren, zweiten Klemmfinger in Umfangsrichtung zugewandten Flanke eines ersten Klemmfingers, den geringsten radialen Abstand zu der Längsachse aufweist. Die Eingriffsspitzen, bevorzugt zwei an einem Klemmfinger, sind entsprechend den Umfangs-Randbereichen oder exakt am Umfangs-Randbereich eines Klemmfingers zugeordnet ausgebildet.

Von den mehreren Klemmfingern kann die genannte Ausbildung bezüglich einer Eingriffskante an nur einem Klemmfinger, an mehreren oder allen Klemmfingern vorgesehen sein. Sie kann auch nur an einer von bevorzugt zwei in Einsteckrichtung hintereinander ausgebildeten Eingriffskanten vorgesehen sein. Weiter bevorzugt ist sie an allen Eingriffskanten vorgesehen.

Weiter ist auch bevorzugt, dass das Klemmteil an seinem den Halterungsausformungen in Axialrichtung abgewandten Endbereich einen nach innen ragenden Anschlagabsatz aufweist. Der Anschlagabsatz kann insbesondere dazu dienen, mit einem vorderen Ende des einzusteckenden Rohres zusammenzuwirken. Der Anschlagabsatz bildet einen Anschlag für das einzusteckende Rohr. Der Anschlagabsatz dient insbesondere auch zur Distanzierung zwischen dem Rohr und der Innenhülse, die allgemein auch als Fitting bezeichnet werden kann, insbesondere zur Verhinderung einer Kontaktkorrosion.

Weiter ist bevorzugt, dass das Klemmteil in Axialrichtung, gesehen von der Einsteckseite aus, jenseits des Anschlagabsatzes einen Fortsetzungsabschnitt aufweist. Der Anschlagabsatz bildet also nicht unbedingt einen Endbereich des Klemmteils. Der Fortsetzungsabschnitt ist allerdings auch bevorzugt in seiner Axialerstreckung deutlich kleiner ausgebildet als der sich in entgegengesetzter Richtung von dem Anschlagabsatz bis zum freien Ende des Klemmteils, insbesondere zum freien Ende der Klemmfinger erstreckende Bereich.

Der Fortsetzungsabschnitt kann rohrabschnittsförmig gebildet sein.

Bevorzugt ist auch, dass der Fortsetzungsabschnitt im Umfangsrichtung in Segmente unterteilt ist. Diese Segmente können durch in Axialrichtung des Klemmteils verlaufende, also den insbesondere Fortsetzungsabschnitt vollständig durchtrennende Ausnehmungen gebildet sein.

Eine axiale Länge des Fortsetzungsabschnittes kann bevorzugt einem Zwanzigstel bis einem Drittel des freien Durchmessers des Klemmteils in diesem Fortsetzungsabschnitt entsprechen.

Axiale Freiräume, welche die Segmente bilden, sind bevorzugt in Umfangsrichtung versetzt angeordnet zu axialen Zwischenräumen, welche die Klemmfinger voneinander sondern.

Ein axialer Freiraum, der zunächst die genannten Segmente hinsichtlich des Fortsetzungsabschnittes bildet, kann sich bevorzugt in Axialrichtung des Klemmteils, gesehen entgegen der Einsteckrichtung, bis in den Anschlagabsatz oder darüber hinaus erstrecken.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10-Schritten der jeweiligen Dimension, gegebenenfalls also auch dimensionslos, beispielsweise 1/10 der Länge, 1/10 des X-Fachen, 1/10 eines Winkels etc., einerseits zur Eingrenzung der genannten Bereichsgrenzen von unten und/oder oben, alternativ oder ergänzend aber auch im Hinblick auf die Offenbarung eines oder mehrerer singulärer Werte aus einem jeweilige angegebenen Bereich.

Nachstehend ist die Erfindung des Weiteren anhand der beigefügten Zeichnungen, die jedoch lediglich Ausführungsbeispiele darstellt, erläutert. Hierbei zeigt:
- Fig. 1: eine Querschnittsansicht des Stecksystems mit eingestecktem Rohr;
- Fig. 2: eine Einzel-Querschnittsdarstellung der Innenhülse;
- Fig. 3: eine Querschnittsansicht des Klemmteils;
- Fig. 4: eine Ansicht des Klemmteils gemäß Fig. 3, gesehen in Richtung R in Fig. 3;
- Fig. 5: eine Seitenansicht des Klemmteil, ungeschnitten;
- Fig. 6: eine Querschnittsansicht der Außenhülse;
- Fig. 7: eine Querschnittsansicht einer in der Außenhülse oder der Innenhülse aufgenommenen Dichtung; und
- Fig. 8: eine Querschnittsansicht des Steckverbindungssystems ohne eingestecktes Rohr.

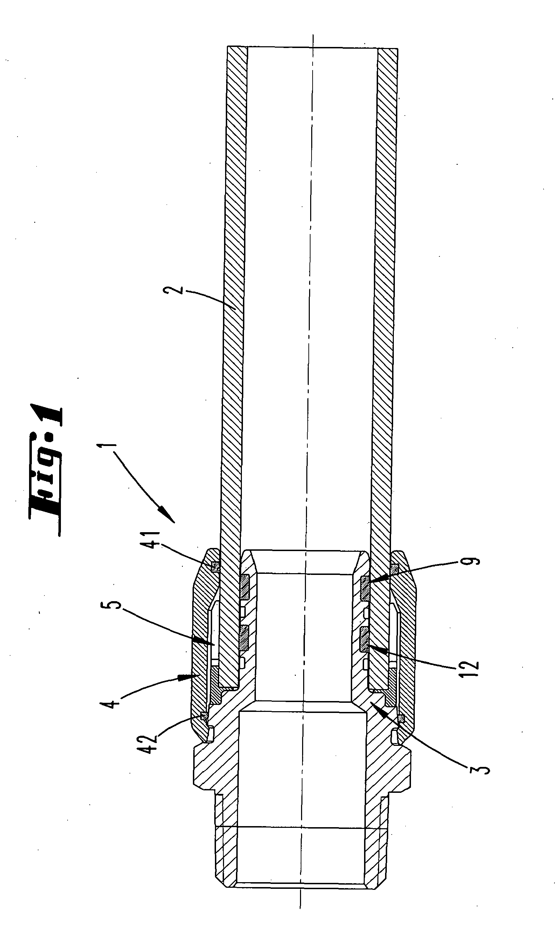

Dargestellt und beschrieben ist, zunächst mit Bezug zu Fig. 1, ein System 1 zur Steckverbindung mit einem Rohr 2, beispielsweise einem Kunststoff/Aluminiumverbundrohr, wobei das System 1 eine Innenhülse 3, die auch als Fitting bezeichnet werden kann, eine Außenhülse 4 und ein zwischen der Innenhülse 3 und der Außenhülse 4 angeordnetes Klemmteil 5 aufweist.

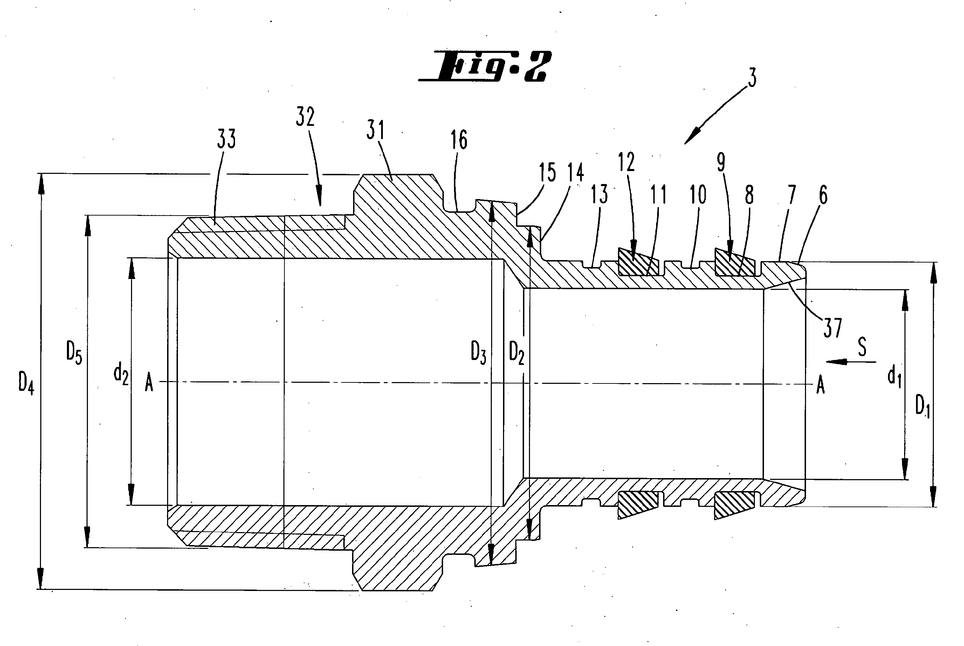

Die Innenhülse 3 ist in weiterer Einzelheit in Fig. 2 dargestellt. Sie weist in Steckrichtung, siehe Pfeil S, eine äußere Abschrägung 6 auf, um mit einer Innenfläche eines einzusteckenden Rohres günstig zusammenzuwirken. In Steckrichtung S folgt außenseitig an die Abschrägung 6 und einen sich bevorzugt zunächst anschließenden Abschnitt 7 konstanten ersten Außendurchmessers D1 eine erste Aufnahme 8 für eine erste darin gehalterte Dichtung 9 der Innenhülse. An die erste Aufnahme 8 schließt sich weiter in Steckrichtung S, bevorzugt gesondert durch einen weiteren Abschnitt konstanten Außendurchmesser, insbesondere desselben Außendurchmessers D1, bevorzugt eine Ausnehmung 10 an, die jedoch bevorzugt eine geringere radiale Tiefe aufweist als sie Aufnahme 8. Diese Ausnehmung 10 ist bevorzugt freiliegend, also ohne ein darin aufgenommenes Teil.

Wiederum bevorzugt gesondert zu der Ausnehmung 10 durch einen Abschnitt konstanten Außendurchmesser, auch hier insbesondere desselben Außendurchmessers D1, schließt sich sodann in Steckrichtung bevorzugt eine zweite Aufnahme 11 für eine zweite Dichtung 12 der Innenhülse an. Die Aufnahmen 8 und/oder 11 sind bevorzugt tiefergehende Aufnahmen als die Aufnahme 10, d.h. ihr Aufnahmeboden liegt auf einem geringeren Durchmessermaß als der Aufnahmeboden der Aufnahme 10.

Eine axiale Erstreckung der Aufnahme 8 und/ oder der Aufnahme 11 entspricht bevorzugt einem Zwanzigstel bis einem Drittel, weiter bevorzugt etwa einem Fünftel eines freien Innendurchmessers d1 der Innenhülse. In Absolutwerten kann die genannte axiale Länge etwa 2 bis 5mm entsprechen.

Dagegen entspricht eine axiale Länge einer Ausnehmung 10 bevorzugt etwa einem Viertel bis zwei Drittel der axialen Länge einer Aufnahme 8.

An die zweite Aufnahme 11 schließt sich in Steckrichtung S der Innenhülse 3, weiter bevorzugt unter Zwischenschaltung eines weiteren Bereiches konstanten Außendurchmessers, insbesondere desselben Außendurchmessers D1, eine weitere Ausnehmung 13 an. Diese Ausnehmung 13 kann in ihrer Gestaltung entsprechend der ersten Ausnehmung 10 gebildet sein.

Bevorzugt ist darüber hinaus, dass alle genannten Bereiche gleichen, konstanten Außendurchmessers der Innenhülse denselben konstanten Außendurchmesser aufweisen.

Dies betrifft auch einen sich an die zweite Ausnehmung 13 in Steckrichtung S weiter anschließenden Bereich konstanten Außendurchmessers, insbesondere also des Außendurchmessers D1, der Innenhülse.

An diesen weiteren Bereich konstanten Außendurchmessers schließt sich eine erste Stufenfläche 14 an, die bevorzugt rechtwinklig zu einer Längsachse A der Innenhülse 3 verläuft. Diese Stufenfläche 14 führt zu einer radialen Erweiterung der Außenfläche der Innenhülse 3. Das Erweiterungsmaß, das im Ausführungsbeispiel mit der Länge der Stufenfläche praktisch zusammenfällt, entspricht gegenüber einem zuvor genanten Bereich konstanten Durchmessers D1 bevorzugt etwa einem Drittel bis einem Zehntel, weiter bevorzugt in Absolutwerten etwa 3 bis 8mm, jeweils bezogen auf ein Durchmessermaß.

An diese erste Stufenfläche 14 schließt sich wiederum in Steckrichtung S ein Bereich konstanten Außendurchmessers D2 an, der dem Außendurchmessermaß der Stufenfläche 14 bevorzugt entspricht. Daran schließ sich eine zweite Stufenfläche 15 an, die in einen Bereich bevorzugt stetig ansteigenden Außendurchmessers D3 übergeht. Dieser Bereich stetig ansteigenden Außenurchmessers D3 bildet also eine Auflaufschräge, wie sie nachstehend als besonders vorteilhaft im Hinblick auf das Aufsetzen der Außenhülse erläutert ist. Die zweite Stufenfläche 15 weist, bezogen auf den Außendurchmesser am radial äußeren Ende der Stufenfläche 15, ein Erweiterungsmaß auf, das ein 1/20 bis 3/10 des Außendurchmesser D2 entspricht.

An diesen Bereich stetig ansteigenden Außendurchmessers schließt sich eine weitere Ausnehmung 16 an. Die Ausnehmung 16 geht dann bevorzugt in einen einen größten Außendurchmesser D4 aufweisenden Flanschbereich 31 der Innenhülse über, der weiter bevorzugt auch außenseitig entsprechend Schraubenschlüssel-Betätigungsflächen abgeflachte, jeweils einen stumpfen Winkel im Querschnitt unter sich einschließenden Betätigungsflächen aufweist. Insofern ist D4 als mittlerer Außendurchmesser zu verstehen.

Der sich in Steckrichtung an die Ausnehmung 16 anschließende Bereich ist hier nach einer Ausführungsform als Mehrkant ausgebildet. Es können aber auch andere Ausführungsformen, eine T-Ausformung bspw., vorgesehen sein. Hier werden solche Ausformungen bevorzugt vorgesehen, wie sie üblicherweise bei Fittings gegeben sind.

An den Flanschbereich 31 schließt sich weiterhin in Steckrichtung S ein Anschlussbereich 32 für ein weiteres Funktionsteil wie etwa ein Ventil oder einen Hahn oder einen weiteren Verbindungsabschnitt an, der bevorzugt mit einem Außengewinde 33 ausgebildet ist. Der Anschlussbereich 32 weist einen Außendurchmesser D5 auf, der bevorzugt kleiner ist als der Außendurchmesser D4 jedoch größer als der Außendurchmesser D1.

Auch dieser Anschlussbereich kann entsprechend den Üblichkeiten bei Fittings abgeändert ausgebildet sein.

Der Inndurchmesser d1 ist bevorzugt konstant, in Steckrichtung S, beginnend mit einem Ende der Abschrägung 6 bzw. der dieser innen entsprechenden Verjüngung 37, weiter beginnend bevorzugt innenseitig zugeordnet einem Ende des Abschnittes 7 und sich erstreckend bis zu dem Bereich, bevorzugt etwas darüber hinaus, in Streckrichtung S, an welchem außenseitig die Stufenfläche 14 ausgebildet ist. In dem Bereich, in welchem außenseitig sich an die Stufenfläche 14 ein Bereich konstanten Außendurchmessers anschließt, erweitert sich der Innendurchmesser d1 bevorzugt auf einen größeren Innendurchmesser d2. Der Innendurchmesser d2 kann hierbei 10 bis 50 %, bevorzugt ca. 30 %, größer sein als der Innendurchmesser d1.

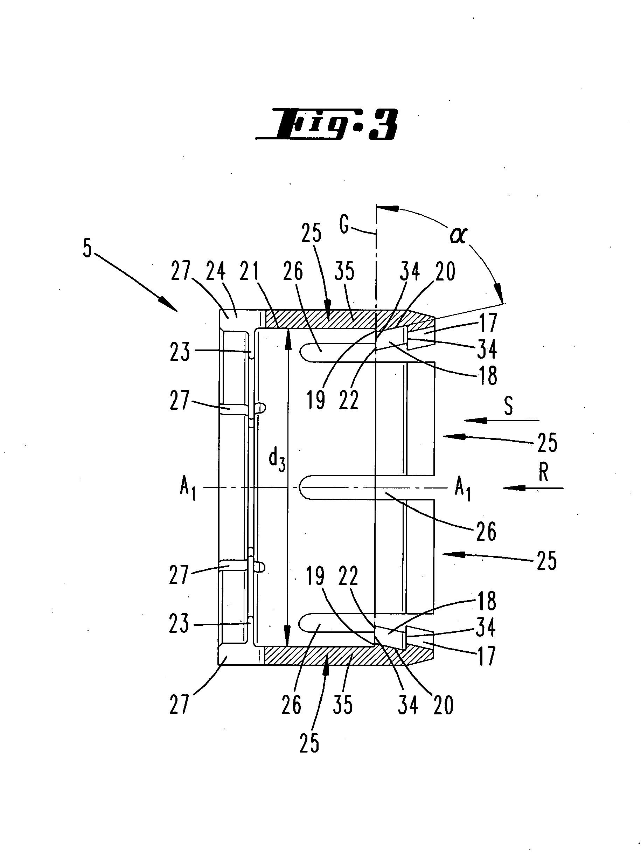

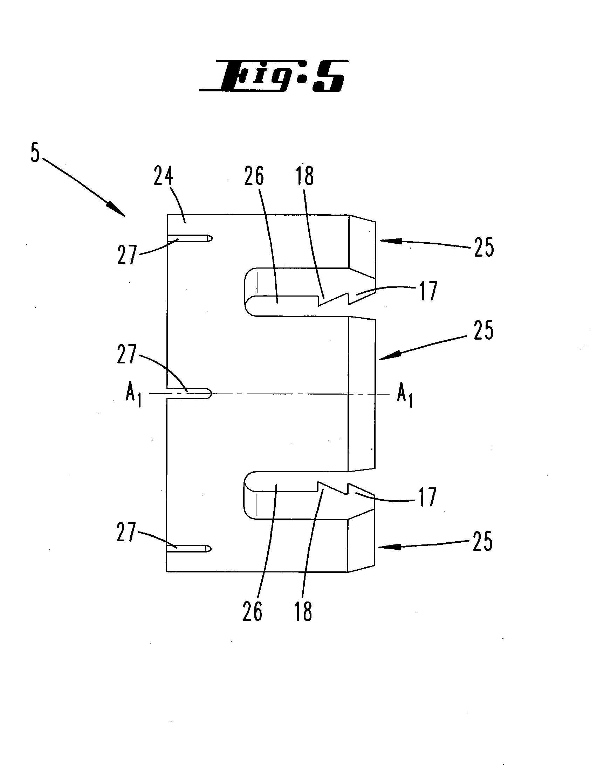

Mit Bezug zu den Fig. 3 bis 5 ist das Klemmteil 5 beschrieben.

Das Klemmteil 5 ist grundsätzlich rohrartig gebildet, weist jedoch insbesondere zwei Bereiche auf, die gegenüber dem ansonsten gegebenen Rohrinnendurchmesser d3 nach innen vorstehen.

Dies sind zum einen in Steckrichtung S die zunächst ausgebildeten, bevorzugt zweifach hintereinander vorgesehenen, Halterungsausformungen 17, 18, die ersichtlich hier zahnartig, nämlich insbesondere sägezahnartig, gebildet sind.

Eine Halterungsausformung 17, 18 weist bezogen auf eine Gerade G, die zu einer Längsachse A1 des Klemmteils 5 senkrecht und durch eine Spitze 34 der Halterungsausformung 17, 18 verläuft, zwei unterschiedliche Flanken 19, 20 auf. Die in Steckrichtung erste Flanke ist die flacher verlaufende Flanke 20. Sie schließt mit der genannten Geraden G einen spitzen Winkel α von bevorzugt 30 bis 85° ein, weiter bevorzugt ca. 70 bis 85° ein.

Die zweite, steilere Flanke 19 schließt beim Ausführungsbeispiel bevorzugt mit der Geraden G einen Winkel von 0° ein, verläuft also in der Geraden G.

Sie kann aber auch einen weiteren spitzen Winkel mit der Geraden G einschließen, der entgegengesetzt zu dem Winkel α dann an der Geraden G abgegriffen ist und sich beispielsweise zwischen 10 und 60° bewegt.

Die Halterungsausformungen 17, 18 erstrecken sich bezogen auf die Schnitteben der Querschnittsdarstellung quer zu der genannten Mittelachse A1, d.h. gegenüber der ansonsten gegebenen Innenfläche 21 des Halterungsteils 5 nach innen vorragend. Bezüglich der Zahnausbildungen ist die Spitze 34 der am weitesten nach innen ragende Bereich.

Jedenfalls eine Zahnspitze 34, bevorzugt auch ein weiterer Bereich der Halterungsausformung, ragt damit gegenüber der Innenwandung 21 bevorzugt nach innen vor.

Das Vorragen der Zahnspitze 34 bzw. ggf. auch eines weiteren Bereichs der Halterungsausformung bezieht sich jedenfalls auf einen sich an einer Halterungsausformung 17, 18 in Steckrichtung S zunächst anschließenden Wandbereich 35. Dieser sich anschließende Wandbereich 35, gegenüber welchem die genannten Charakterisierung zutreffend ist, erstreckt sich jedenfalls über eine axiale Länge des Klemmteils, die einem Fünftel bis zum Zweifachen des freien Durchmessers d3 des Klemmteils 5 in diesem Bereich entspricht. An den genannten Wandbereich 35 schließt sich sodann ein Anschlagabsatz 23 an. Der Anschlagabsatz 23 ragt vergleichbar den Halterungsausformungen 17, 18, jedoch bevorzugt im unbeeinflussten Zustand der Halterungsausformungen 17, 18 weiter als die Halterungsausformungen 17,18, in das Innere des Klemmteils hinein vor. Er dient als Anschlag für ein Stirnende eines einzusteckenden und steckzuhalternden Rohres, bzw. zur Verhinderung von Kontaktkorrosion.

Weiter ist bevorzugt vorgesehen, dass die Halterungsausformungen 17, 18 an einer Mehrzahl von in Umfangsrichtung einzeln gebildeten Klemmfingern 25 ausgebildet sind. Ein Klemmfinger 25 ist durch einen axialen Zwischenraum 26 gegeben, der also einen entsprechenden Umfangs-Freiraum darstellt. Die axiale Länge des Zwischenraums 26 ist bevorzugt kleiner als es der axialen Länge von einer einsteckseitigen Spitze des Klemmteils 5 bis zu dem Anschlagabschnitt 23 entspricht. Bevorzugt entspricht diese Länge etwa einem Drittel bis neun Zehntel der genannten Länge bis zu dem Anschlagabschnitt 23.

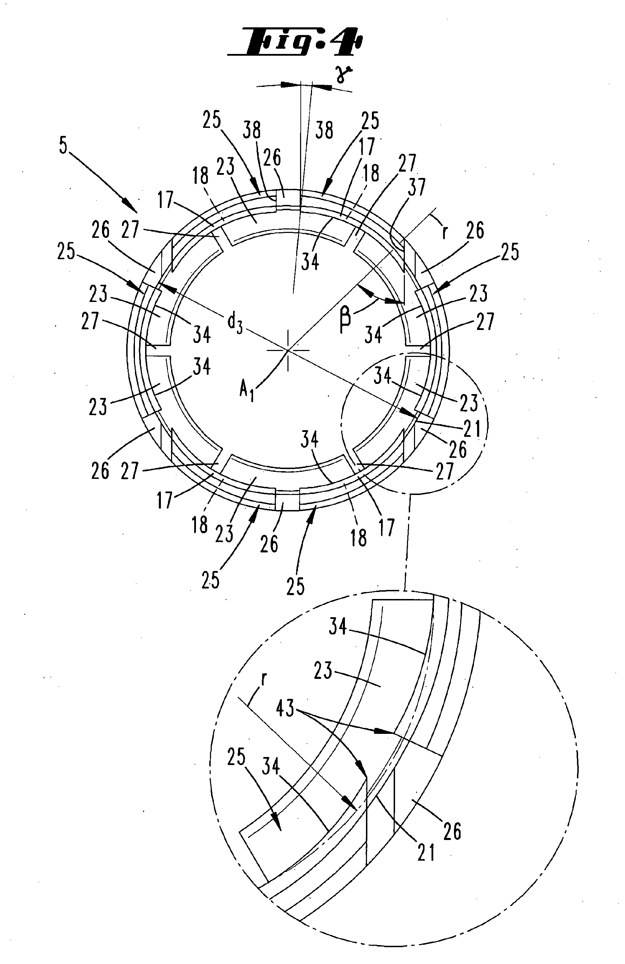

Eine Zahnspitze 34 ist ersichtlich, wie auch aus Figur 4 hervorgeht, in Umfangsrichtung gesehen eine Eingriffskante. Wie aus der Lupendarstellung der Figur 4 ersichtlich, weist diese bevorzugt über ihre Länge, in Umfangsrichtung gesehen, unterschiedlichen radialen Abstand r zu der Mittelachse A1 auf. So sind an einem Klemmfinger 25 ein oder zwei Spitzenbereiche 43 geschaffen, die zudem, bezogen auf die in der Lupendarstellung ersichtlichen Klemmfinger 25, an einem Umfangsende eines Klemmfingers 25 ausgebildet sind.

Alle Eingriffskanten der Klemmfinger 25 zusammengefasst (bezüglich einer Ebene senkrecht zu der Mittelachse A1) können bspw. einer Ovallinie folgend gebildet sein.

Jenseits des Anschlagabsatzes 23, weiter in Steckrichtung S, schließt sich ein Fortsetzungsabschnitt 24 an. Der Fortsetzungsabschnitt 24 ist bevorzugt auch rohr- bzw. zylinderartig gebildet, weist jedoch bevorzugt eine gegenüber dem entgegen der Steckrichtung S von dem Anschlagabschnitt 23 sich erstreckenden Bereich wesentlich kürzere Länge auf. Sie entspricht bevorzugt einem Zwanzigstel bis einem Zehntel des freien Durchmessers d3. Ein freier Innendurchmesser des Fortsetzungsabschnitts 24 kann gleich dem Innendurchmesser d3 sein oder beispielsweise bis zu 10 % kleiner.

Die genannten Eingriffskanten 34 weisen bevorzugt zugeordnet ihrem Umfangsende bei einem oder mehreren oder allen einzelnen Klemmfingern 25 den genannten geringsten Abstand zur Mittelachse A1 auf, wie dies auch aus der Lupendarstellung der Figur 4 hervorgeht.

Auch der Fortsetzungsabschnitt 24 ist bevorzugt in Umfangsrichtung unterbrochen, nämlich durch Zwischenräume 27. Ein Zwischenraum 27 erstreckt sich in axialer Länge, ausgehend von dem den einsteckseitigen Ende des Klemmteils 5 entgegengesetzten Ende, über eine Länge, welche mindestens der freien Länge, also d.h. der Länge bis zum Anschlagabschnitt 23, des Forstsetzungsanschnitts entspricht. Weiter bevorzugt erstrecken sie sich darüber hinaus, jedoch darüber hinaus bevorzugt nicht bis in eine Umfangs-Überdeckung zu einem Zwischenraum 26. Aus der Darstellung der Figur 4 ist ersichtlich, dass insgesamt über den Umfang 6 Klemmfinger 25 ausgebildet sind.

Weiter ist auch ersichtlich, dass bevorzugt bei einem oder mehreren der Klemmfinger eine Umfangsrichtung weisende Seitenfläche 37 ausgebildet ist, die schräg zu einer Radialen r verläuft, d. h. mit einer Radialen r einen spitzen Winkel β einschließt, der beispielsweise 40 bis 80° betragen kann. Weiter bevorzugt ist bei einem Klemmfinger 25 eine (weitere) Seitenfläche 38 geradlinig verlaufend ausgebildet, d. h. auch abweichend von einer Radialen aber einen wesentlich kleineren spitzen Winkel γ mit einer Radialen einschließend, der bevorzugt im einstelligen Gradbereich, beispielsweise zwischen 0,5 und 9,5°, ausgebildet ist.

Weiter bevorzugt ist, dass eine Seitenfläche 37 eines ersten Klemmfingers 25 in Umfangsrichtung einer Seitenfläche 38 eines zweiten Klemmfingers 25 gegenüberliegt.

Weiter bevorzugt ist einer oder mehrerer der Klemmfinger 25 mit zwei Seitenflächen 38 ausgebildet, wobei jede dieser Seitenflächen 38 einer Seitenfläche 37 eines weiteren Klemmfingers 25 in Umfangsrichtung gegenüberliegt.

Diese unterschiedliche Ausgestaltung der Klemmfinger hat insbesondere Vorteile im Hinblick auf ein Einführen und ggf. Drehen des zu klemmenden Rohres.

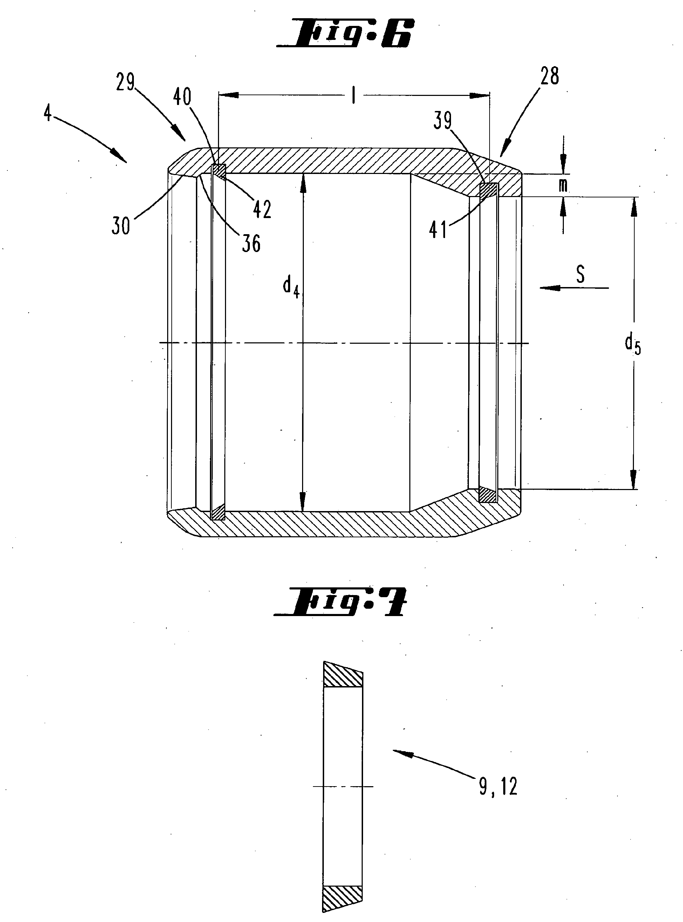

Mit Bezug zu Fig. 6 ist die Außenhülse 4 in weiterer Einzelheit dargestellt.

Die Außenhülse 4 ist ebenfalls ausgehend von einem rohrförmigen Teil gebildet. Sie weist in Steckrichtung S gesehen zunächst einen vorderen Einschnürungsabschnitt 28 auf. Der Einschnürungsabschnitt 28 ist gegenüber einem freien Innendurchmesser d4, der sich ein unbeeinflussten rohrförmigen Abschnitt der Außenhülse 4 bezieht, um ein Maß m eingezogen, das einem Hundertstel bis einem Drittel des genannten Durchmessers d4 entspricht. Absolut gesehen kann die Einziehung 2 bis 8mm betragen, auf den hierdurch im engsten Bereich gegebenen Durchmesser d5 bezogen, also einem doppelten Wert.

Am gegenüberliegenden Ende weist die Außenhülse 4 einen Auflaufabschnitt 29 auf, der sich durch eine Auflaufschräge 30 auszeichnet, die in Steckrichtung S sich erweiternd gebildet ist. Die Auflaufschräge 30 beginnt etwa mit dem Innendurchmesser d4 und endet (entgegen der Steckrichtung S betrachtet) innerhalb des Außendurchmessers D3. Sie dient im Hinblick auf das Gesamtsystem zum Auflaufen und Einrasten der Außenhülse 4 auf die Innenhülse 3, nämlich zum Auflaufen auf die zufolge des zunehmenden Durchmessers D3 gegebene Schräge vor der Ausnehmung 16. Mit der hülseninnenseitig ausgebildeten Stufenfläche 36 rastet die Außenhülse 4 in die Ausnehmung 16 ein.

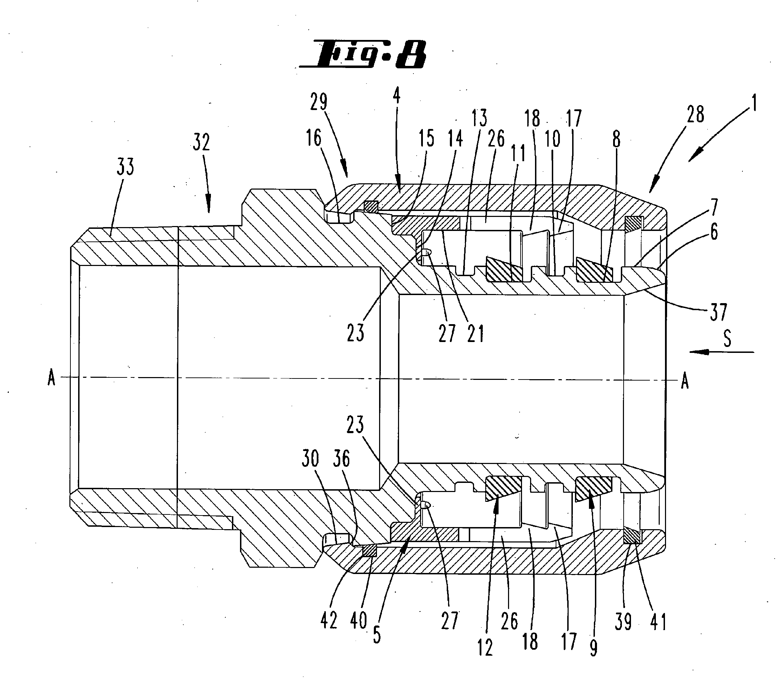

Wie weiter ersichtlich, sind in der Außenhülse 4 innenseitig zwei in Einsteckrichtung S beabstandete nutartige Ausnehmungen 39, 40 ausgebildet. In diesen nutartigen Ausnehmungen ist bevorzugt jeweils im zusammengebauten Zustand, siehe etwa Figur 8 oder Figur 1, eine umfangsmäßige umlaufende Dichtung 41, 42 aufgenommen. Auch wie im Weiteren hier noch ausgeführt, kann es sich um übliche O-Ringe handeln oder Dichtungen in der besonderen Gestaltung, wie sie hier beschrieben sind. Die Dichtungen können soweit es sich um Kunststoffteile handelt, auch unmittelbar, etwa im Zweikomponenten-Spritzverfahren, angespritzt sein.

Beim Ausführungsbeispiel der Figur 6 ist ersichtlich, dass die Dichtungen 41, 42 im Querschnitt zahnförmig gebildet sind. Hierbei ist eine steile Flanke und eine flache Flanke verwirklicht. Die flache Flanke ist beim Ausführungsbeispiel der Figur 6 bezogen auf die in Steckrichtung S erste Dichtung 41 vorderseitig ausgebildet, dagegen die steile Flanke rückseitig. Bei der in Steckrichtung S folgenden Dichtung 40 ist die steile Flanke in Einsteckrichtung vorderseitig und die flache Flanke in Einsteckrichtung rückseitig ausgebildet.

Dies ist besonders vorteilhaft im Hinblick auf eine Aufschiebung der Außenhülse auf die Innenhülse in den Zustand gemäß Figur 4, da bei diesem Aufschieben das einzusteckende Rohr noch nicht vorhanden ist, aber die flache Flanke dann günstig an der Schrägfläche des Durchmesser D3 aufgleiten kann.

Die Dichtungen 41, 42 sind unabhängig von ihrer Ausgestaltung in Steckrichtung S bevorzugt mit axialen Länge 1 beabstandet, die größer ist als eine axiale Erstreckung des Klemmteils. So ist es möglich, wie sich aus Figur 1 und Figur 8 ergibt, dass das Klemmteil 5 im zusammengesetzten Zustand vollständig zwischen den Dichtungen 39, 40 angeordnet ist.

Im Anschluss an die Dichtung 40 in Steckrichtung schließt sich die genannte Auflaufschräge 30 der Auflaufhülse an. Aufgrund der Stufenfläche 36 ergibt sich die beschriebene Einrastung im Zusammenbauzustand gemäß Figur 8. Hierbei kann vorgesehen sein, dass im zusammengesetzten Zustand in diesem Bereich der Außenhülse eine gewisse Aufweitung gegeben ist, die zusätzlich eine elastische Vorspannung in die so gegebene Steckstellung ergibt.

Eine axiale Abmessung der Auflaufschräge 30, projiziert auf eine Mittelachse der Außenhülse, entspricht bevorzugt der axialen Länge der Ausnehmung 16.

Mit Bezug zu Figur 7 ist der Querschnitt einer Dichtung dargestellt, die hier im Bezug auf die Anbringung auf der Innenhülse wiedergegeben ist.

Ersichtlich ist die Dichtung kreisringförmig gebildet, wobei die genannten Flanken und die Spitze ersichtlich sind. Die Spitze weist ins Innere, wenn es sich um eine innenseitig der Außenhülse angebrachte Dichtung handelt.

Diese Dichtungen sind weiter aus der in Figur 8 dargestellten Steckverbindung ohne eingestecktes Rohr ersichtlich. Bis auf die dem erweiterten Außendurchmesser D4 zugeordnete Dichtung sind die Dichtungen jeweils im entspannten Zustand dargestellt, da eben kein Rohr eingesteckt ist.

Eine oder mehrere oder auch alle Dichtungen der Außenhülse und/oder der Innenhülse können anstatt der bevorzugt beschriebenen im Querschnitt zahnförmigen Gestaltung auch als übliche im Querschnitt runde Dichtungen (O-Ringe) ausgebildet sein.

**Bezugszeichenliste**

| | | | |
|---|---|---|---|
| 1 | System | 24 | Fortsetzungsabschnitt |
| 2 | Rohr | 25 | Klemmfinger |
| 3 | Innenhülse | 26 | Zwischenraum |
| 4 | Außenhülse | 27 | Zwischenraum |
| 5 | Klemmteil | 28 | Einschnürungsabschnitt |
| 6 | Abschrägung | 29 | Auflaufabschnitt |
| 7 | Abschnitt | 30 | Auflaufschräge |
| 8 | Aufnahme | 31 | Flansch |
| 9 | Dichtung | 32 | Anschlussbereich |
| 10 | Ausnehmung | 33 | Außengewinde |
| 11 | Aufnahme | 34 | Spitze |
| 12 | Dichtung | 35 | Wandbereich |
| 13 | Ausnehmung | 36 | Stufenfläche |
| 14 | Stufenfläche | 37 | Seitenfläche |
| 15 | Stufenfläche | 38 | Seitenfläche |
| 16 | Ausnehmung | 39 | Ausnehmung |
| 17 | Halterungsausformung | 40 | Ausnehmung |
| 18 | Halterungsausformung | 41 | Dichtung |
| 19 | Flanke | 42 | Dichtung |
| 20 | Flanke | 43 | Spitzenbereiche |
| 21 | Innenfläche | α | Winkel |
| 22 | Zahnspitze | β | Winkel |
| 23 | Anschlagabsatz | γ | Winkel |
| D1 | Außendurchmesser | d1 | Innendurchmesser |
| D2 | Außendurchmesser | d2 | Innendurchmesser |
| D3 | Außendurchmesser | d3 | Innendurchmesser |
| D4 | Außendurchmesser | d4 | Innendurchmesser |
| D5 | Außendurchmesser | d5 | Innendurchmesser |
| S | Steckrichtung | a | Abstand |
| r | Radiale | | |

## Patentansprüche

1. System (1) zur Steckverbindung von Rohren (2), mit einer Innenhülse (3) und einer Außenhülse (4), wobei ein zu verbindendes Rohr (2) auf der Innenhülse (3) aufsitzt und zwischen der Innenhülse (3) und der Außenhülse (4) ein Klemmteil (5) angeordnet ist, wobei die Hülsen (3,4) und das Klemmteil (5) eine in Einsteckrichtung (S) gegebene axiale Länge aufweisen, die Außenhülse (4) einsteckseitig eine erste umlaufende Dichtung (41) zur Zusammenwirkung mit einer Außenfläche des eingeschobenen Rohres (2) und nach der ersten Dichtung (41) eine zweite umlaufende Dichtung (42) zur Zusammenwirkung mit der Innenhülse (3) aufweist, wobei ein axialer Abstand (a) zwischen der ersten und der zweiten Dichtung (41, 42) größer ist als die axiale Länge des Klemmteils (5) und das Klemmteil (5) zwischen den Dichtungen (41, 42) aufnehmbar ist, **dadurch gekennzeichnet, dass** die Innenhülse (3) ein oder mehrere in Axialrichtung der Innenhülse (3) hintereinander angeordnete Dichtungen (9,12) aufweist zur dichtenden Zusammenwirkung zwischen der Innenhülse und einer Innenfläche des einzusteckenden Rohres (2), und dass der Raum zwischen der Außenhülse (4) und dem einzusteckenden Rohr (2) abgedichtet ist.

2. System nach Anspruch 1, **dadurch gekennzeichnet, dass** eine Dichtung (41, 42) der Außenhülse (4) im Querschnitt zahnartig gebildet ist.

3. System nach Anspruch 1 oder 2, **dadurch gekennzeichnet, dass** die erste Dichtung (41) der Außenhülse (4) im Querschnitt bezogen auf die Einsteckrichtung (S) eine steilere und eine flache Flanke aufweist und, bevorzugt, die flachere Flanke der in Einsteckrichtung ersten Dichtung (41) der Außenhülse (4) die in Einsteckrichtung (S) erste Flanke ist.

4. System nach Anspruch 3, **dadurch gekennzeichnet, dass** die steilere Flanke der in Einsteckrichtung ersten Dichtung (41) der Außenhülse (4) bezogen auf eine Längsachse der Außenhülse (4) rechtwinklig verläuft und/oder die flachere Flanke der in Einsteckrichtung zweiten Dichtung (42) der Außenhülse (4) die in Einsteckrichtung zweite Flanke ist.

5. System nach einem der vorhergehenden Ansprüche, **dadurch gekennzeichnet, dass** eine Dichtung (9,12) eine Innenhülse (3), im Querschnitt bezogen auf die Einsteckrichtung (S) eine steilere und eine flachere Flanke aufweist und dass die flachere Flanke der Dichtung (9,12) der Innenhülse (3) die in Einsteckrichtung erste Flanke ist.

6. System nach Anspruch 5, **dadurch gekennzeichnet, dass** die steilere Flanke der Dichtung (9,12) der Innenhülse (3) bezogen auf eine Längsachse der Innenhülse (3) rechtwinkelig verläuft.

7. System nach einem der vorhergehenden Ansprüche, **dadurch gekennzeichnet, dass** das Klemmteil (5) rohrabschnittsförmig gebildet ist mit quer zu einer Rohrachse wirkenden, im Querschnitt zahnartig gebildeten Halterungsausformungen, und dass das Klemmteil (5) an seinem den Halterungsausformungen in Axialrichtung abgewandten Endbereich einen nach innen vorragenden Anschlagabsatz (23) aufweist.

8. System nach Anspruch 7, **dadurch gekennzeichnet, dass** eine Zahnausformung des Klemmteils einsteckseitig eine Einführschräge aufweist, wobei, bevorzugt, eine Zahnspitze (34) der Zahnausformung gegenüber einem sich in Einsteckrichtung (S) anschließenden Wandbereich (35) des Klemmteils (5) vorragend ausgebildet ist.

9. System nach Anspruch 8, **dadurch gekennzeichnet, dass** eine im Querschnitt als Zahnspitze (34) erscheinende Eingriffskante über ihre Länge unterschiedlichen Abstand zu der Mittelachse (A1) des Klemmteils aufweist.

10. System nach einem der Ansprüche 8 oder 9, **dadurch gekennzeichnet, dass** der anschließende Wandbereich (35) eine axiale Länge des Klemmteils (5) betrifft, die 1/3 bis zum 2-fachen eines freien Durchmesser (d3) des Klemmteils (5) in diesem Wandbereich (35) entspricht und/oder dass das Klemmteil (5) einzelne, sich in Achsrichtung erstreckende Klemmfinger (25) aufweist.

11. System nach einem der vorhergehenden Ansprüche, **dadurch gekennzeichnet, dass** das Klemmteil Klemmfinger (25) aufweist und dass ein Klemmfingern (25) zugeordnet seinem freien Ende mit einer oder mehreren Halterungsausformungen ausgebildet ist.

12. System nach Anspruch 11, **dadurch gekennzeichnet, dass** die Eingriffskante zugeordnet einem Umfangsende eine Klemmfingers (25) den geringsten Abstand aufweist, zur Ausbildung eines Spitzenbereichs (43).

13. System nach einem der Ansprüche 7 bis 12, **dadurch gekennzeichnet, dass** das Klemmteil (5) in Axialrichtung, gesehen von der Einsteckseite, jenseits des Anschlagabsatzes (23) einen Fortsetzungsabschnitt (24) aufweist, wobei, bevorzugt, der Fortsetzungsabschnitt (24) rohrabschnittsförmig gebildet ist und/oder der Fortsetzungsabschnitt (24) in Umfangsrichtung in Segmente unterteilt ist und/oder eine axiale Länge des Fortsetzungsabschnitts (24) 1/20 bis 1/3 eines freien Durchmessers des Klemmteils (5) in diesem Fortsetzungsabschnitt (24) entspricht.

14. System nach Anspruch 13, **dadurch gekennzeichnet, dass** die Segmente durch axiale Zwischenräume (27) gebildet sind, wobei, bevorzugt, die Zwischenräume (27 in Umfangsrichtung versetzt angeordnet sind zu axialen Zwischenräumen (26), welche die Klemmfinger (25) voneinander sondern.

15. System nach Anspruch 14, **dadurch gekennzeichnet dass** ein axialer Zwischenraum (26) sich in Axialrichtung des Klemmteils (5), gesehen entgegen der Einsteckrichtung, bis in den Anschlagabsatz (23) oder darüber hinaus erstreckt.

## Claims

1. System (1) for the plugged connection of tubes (2), comprising an inner sleeve (3) and an outer sleeve (4), a tube (2) to be connected resting on the inner sleeve (3) and a clamping part (5) being arranged between the inner sleeve (3) and the outer sleeve (4), the sleeves (3, 4) and the clamping part (5) having an axial length in the plug-in direction (S), the outer sleeve (4) having, on the plug-in side, a first circumferential seal (41) for interacting with an outer surface of the inserted tube (2) and, after the first seal (41), a second circumferential seal (42) for interacting with the inner sleeve (3), an axial spacing (a) between the first and the second seal (41, 42) being greater than the axial length of the clamping part (5) and the clamping part (5) being receivable between the seals (41, 42), **characterised in that** the inner sleeve (3) has one or more seals (9, 12), which are arranged behind one another in the axial direction of the inner sleeve (3), for sealing interaction between the inner sleeve and an inner surface of the tube (2) to be plugged in, and **in that** the space between the outer sleeve (4) and the tube (2) to be plugged in is sealed.

2. System according to claim 1, **characterised in that** one seal (41, 42) of the outer sleeve (4) is formed in a tooth-like manner in cross section.

3. System according to either claim 1 or claim 2, **characterised in that** the first seal (41) of the outer sleeve (4) has a steeper and a flat side in cross section, based on the plug-in direction (S), and preferably the flatter side of the first seal (41), in the plug-in direction, of the outer sleeve (4) is the first side in the plug-in direction (S).

4. System according to claim 3, **characterised in that** the steeper side of the first seal (41), in the plug-in direction, of the outer sleeve (4) extends at a right angle, based on a longitudinal axis of the outer sleeve (4), and/or the flatter side of the second seal (42), in the plug-in direction, of the outer sleeve (4) is the second side in the plug-in direction.

5. System according to any of the preceding claims, **characterised in that** one seal (9, 12) of the inner sleeve (3) has a steeper and a flatter side in cross section, based on the plug-in direction (S), and **in that** the flatter side of the seal (9, 12) of the inner sleeve (3) is the first side in the plug-in direction.

6. System according to claim 5, **characterised in that** the steeper side of the seal (9, 12) of the inner sleeve (3) extends at a right angle, based on a longitudinal axis of the inner sleeve (3).

7. System according to any of the preceding claims, **characterised in that** the clamping part (5) is formed in the shape of a tube portion having holding protrusions which act transversely to a tube axis and are formed in a tooth-like manner in cross section, and **in that** the clamping part (5) has an inwardly protruding stop shoulder (23) at its end region which is remote from the holding protrusions in the axial direction.

8. System according to claim 7, **characterised in that** a tooth protrusion of the clamping part has a lead-in chamfer on the plug-in side, a tooth tip (34) of the tooth protrusion preferably being designed to protrude with respect to an adjoining wall region (35) of the clamping part (5) which is adjoined in the plug-in direction (S).

9. System according to claim 8, **characterised in that** an engaging edge which appears as a tooth tip (34) in cross section is, over its length, at a differing distance from the central axis (A1) of the clamping part.

10. System according to either claim 8 or claim 9, **characterised in that** the adjoining wall region (35) has an axial length of the clamping part (5) that corresponds to a 1/3 to twice the size of a free diameter (d3) of the clamping part (5) in this wall region (35) and/or **in that** the clamping part (5) has individual clamping fingers (25) which extend in the direction of the axis.

11. System according to any of the preceding claims, **characterised in that** the clamping part has clamping fingers (25) and **in that** a clamping finger (25) assigned to the free end of the clamping part is designed to have one or more holding protrusions.

12. System according to claim 11, **characterised in that** the engaging edge assigned to a circumferential end of a clamping finger (25) has the shortest distance in order to form a tip region (43).

13. System according to any of claims 7 to 12, **characterised in that** the clamping part (5) has an continuation portion (24) beyond the stop shoulder (23) in the axial direction, when viewed from the plug-in side, the continuation portion (24) preferably being formed in the shape of a tube portion and/or the continuation portion (24) being divided into segments in the circumferential direction and/or an axial length of the continuation portion (24) being 1/20 to 1/3 of a free diameter of the clamping part (5) in said continuation portion (24).

14. System according to claim 13, **characterised in that** the segments are formed by axial intermediate spaces (27), the intermediate spaces (27) preferably being arranged in the circumferential direction so as to be offset from axial intermediate spaces (26) which separate the clamping fingers (25) from one another.

15. System according to claim 14, **characterised in that** an axial intermediate space (26) extends in the axial direction of the clamping part (5), when viewed in the opposite direction to the plug-in direction, into the stop shoulder (23) or further.

## Revendications

1. Système (1) de raccordement par enfichage de tubes (2), comportant une gaine intérieure (3) et une gaine extérieure (4), un tube (2) à raccorder reposant sur la gaine intérieure (3) et un élément de serrage (5) étant disposé entre la gaine intérieure (3) et la gaine extérieure (4), les gaines (3, 4) et l'élément de serrage (5) comportant un axe longitudinal donné dans la direction d'enfichage (S), la gaine extérieure (4) comporte du côté d'enfichage un premier joint d'étanchéité (41) périphérique destiné à coopérer avec une surface extérieure du tube (2) inséré, et un deuxième joint d'étanchéité (42) périphérique après le premier joint d'étanchéité (41), destiné à coopérer avec la gaine intérieure (3), une distance axiale (a) entre le premier et le deuxième joint d'étanchéité (41, 42) étant supérieure à la longueur axiale de l'élément de serrage (5), et l'élément de serrage (5) pouvant être reçu entre les joints d'étanchéité (41, 42), **caractérisé en ce que** la gaine intérieure (3) comporte un ou plusieurs joints d'étanchéité (9, 12), disposés les uns derrière les autres dans la direction axiale de la gaine intérieure (3) et destinés à coopérer de façon étanche entre la gaine intérieure et une surface intérieure du tube (2) à enficher, et **en ce que** l'espace entre la gaine extérieure (4) et le tube (2) à enficher est rendu étanche.

2. Système selon la revendication 1, **caractérisé en ce qu'**un joint d'étanchéité (41, 42) de la gaine extérieure (4) est réalisé avec une section transversale en forme de dent.

3. Système selon la revendication 1 ou 2, **caractérisé en ce que** le premier joint d'étanchéité (41) de la gaine extérieure (4) comporte en coupe transversale, par référence à la direction d'enfichage (S), un flanc plus incliné et un flanc plus plat et, de préférence, le flanc plus plat du premier, dans la direction d'enfichage, joint d'étanchéité (41) de la gaine extérieure (4) est le premier flanc dans la direction d'enfichage (S).

4. Système selon la revendication 3, **caractérisé en ce que** le flanc plus incliné du premier, dans la direction d'enfichage, joint d'étanchéité (41) de la gaine extérieure (4) s'étend à angle droit par rapport à un axe longitudinal de la gaine extérieure (4) et/ou le flanc plus plat du deuxième, dans la direction d'enfichage, joint d'étanchéité (42) de la gaine extérieure (4) est le deuxième flanc dans la direction d'enfichage.

5. Système selon l'une quelconque des revendications précédentes, **caractérisé en ce qu'**un joint d'étanchéité (9, 12) d'une gaine intérieure (3) comporte en coupe transversale, par référence à la direction d'enfichage (S), un flanc plus incliné et un flanc plus plat et **en ce que** le flanc plus plat du joint d'étanchéité (9, 12) de la gaine intérieure (3) est le premier flanc dans la direction d'enfichage.

6. Système selon la revendication 5, **caractérisé en ce que** le flanc plus incliné du joint d'étanchéité (9, 12) de la gaine intérieure (3) s'étend en angle droit par rapport un axe longitudinal de la gaine intérieure (3).

7. Système selon l'une quelconque des revendications précédentes, **caractérisé en ce que** l'élément de serrage (5) est réalisé en forme de tronçon de tube avec des façonnages de retenue réalisés en forme de dent en coupe transversale et agissant transversalement à un axe du tube, et **en ce que** l'élément de serrage (5), au niveau de sa zone d'extrémité détournée des façonnages de retenue dans la direction axiale, comporte un talon de butée (23) en saillie vers l'intérieur.

8. Système selon la revendication 7, **caractérisé en ce qu'**un façonnage en forme de dent de l'élément de serrage comporte, du côté de l'enfichage, une rampe d'introduction, de préférence, une pointe (34) du façonnage en forme de dent étant réalisée en saillie par rapport à une zone de paroi (35), adjacente dans la direction d'enfichage (S), de l'élément de serrage (5).

9. Système selon la revendication 8, **caractérisé en ce qu'**un bord d'engagement, apparaissant en forme de pointe de dent (34) sur une coupe transversale, présente sur sa longueur une distance différente par rapport à l'axe médian (A1) de l'élément de serrage.

10. Système selon la revendication 8 ou 9, **caractérisé en ce que** la zone de paroi (35) adjacente concerne une longueur axiale de l'élément de serrage (5) qui correspond à 1/3 jusqu'à 2 fois un diamètre (d3) libre de l'élément de serrage (5) dans cette zone de paroi (35) et/ou **en ce que** l'élément de serrage (5) comporte des doigts de serrage (25) individuels orientés dans la direction axiale.

11. Système selon l'une quelconque des revendications précédentes, **caractérisé en ce que** l'élément de serrage comporte des doigts de serrage (25) et **en ce qu'**un doigt de serrage (25), associé à son extrémité libre, est réalisé avec un ou plusieurs façonnages de retenue.

12. Système selon la revendication 11, **caractérisé en ce que** le bord d'engagement, associé à une extrémité périphérique d'un doigt de serrage (25), possède la plus petite distance pour la réalisation d'une zone en pointe (43).

13. Système selon l'une quelconque des revendications 7 à 12, **caractérisé en ce que** l'élément de serrage (5) dans la direction axiale, vu du côté de l'enfichage, comporte de l'autre côté du talon de butée (23), une portion de prolongement (24), de préférence, ladite portion de prolongement (24) est réalisée en forme de tronçon de tube et/ou la portion de prolongement (24) est divisée dans la direction périphérique en segments et/ou une longueur axiale de la portion de prolongement (24) correspond à 1/20 jusqu'à 1/3 d'un diamètre libre de l'élément de serrage (5) dans cette portion de prolongement (24).

14. Système selon la revendication 13, **caractérisé en ce que** les segments sont formés par des espaces intermédiaires (27) axiaux, de préférence, les espaces intermédiaires (27) sont disposés en étant décalés dans la direction périphérique en formant des espaces intermédiaires (26) axiaux qui séparent les doigts de serrage (25) les uns des autres.

15. Système selon la revendication 14, **caractérisé en ce qu'**un espace intermédiaire (26) axial s'étend dans la direction axiale de l'élément de serrage (5), vu dans la direction opposée à la direction d'enfichage, jusque dans le talon de butée (23) ou au-delà.
